Europäisches Patentamt

European Patent Office

Office européen des brevets

(11) Veröffentlichungsnummer: **0 263 249 B1**

(19)

(12) **EUROPÄISCHE PATENTSCHRIFT**

(45) Veröffentlichungstag der Patentschrift: **16.10.91**

(21) Anmeldenummer: **87110591.2**

(22) Anmeldetag: **22.07.87**

(51) Int. Cl.5: **G01F 11/04**, F16N 27/00, B61K 3/00

(54) Dosiereinrichtung.

(30) Priorität: **04.10.86 DE 3633895**

(43) Veröffentlichungstag der Anmeldung:
**13.04.88 Patentblatt 88/15**

(45) Bekanntmachung des Hinweises auf die
Patenterteilung:
**16.10.91 Patentblatt 91/42**

(84) Benannte Vertragsstaaten:
**AT BE CH DE LI**

(56) Entgegenhaltungen:
**DE-A- 2 910 036
DE-A- 3 031 830
DE-A- 3 119 333
GB-A- 413 547
US-A- 2 355 241**

(73) Patentinhaber: **MANNESMANN REXROTH
PNEUMATIK GMBH
Bartweg 13, Postfach 91 12 70
W-3000 Hannover 91(DE)**

(72) Erfinder: **Lehnert, Erhard
Th.-Heuss-Strasse 3
W-3162 Uetze/Dollbergen(DE)**
Erfinder: **Windel, Manfred
Lärchenweg 1
W-3000 Hannover 91(DE)**

(74) Vertreter: **Flaig, Siegfried
c/o Mannesmann AG Abteilung TP Postfach
5501
W-4000 Düsseldorf 1(DE)**

## Beschreibung

Die Erfindung betrifft eine Dosiereinrichtung für fließfähige Stoffe, insbesondere für Schmiermittel zur Spurkranzschmierung von Schienenfahrzeugen.

Aus der DE-OS 31 19 333 ist eine Dosiereinrichtung bekannt, welche eine Eingangskammer, eine Dosierkammer und eine Ausgangskammer aufweist. Die Eingangskammer ist über ein Einlaßventil mit einem Eingang verbindbar, der mit einem Vorratsbehälter in Verbindung steht. Die Ausgangskammer ist über ein Auslaßventil mit der Dosierkammer verbindbar und weist auf ihrer dem Auslaßventil gegenüberliegenden Seite einen Ausgang auf, an dem ein Strahldüsenrohr angeschlossen ist. Mittels eines die Eingangskammer begrenzenden als Dosierkolben dienenden Kolbens und einer auf den Dosierkolben einwirkenden Betätigungseinrichtung wird der fließfähige Stoff, wie z. B. Schmiermittel, unter Druck durch das Auslaßventil, die Ausgangskammer und das Strahldüsenrohr auf den Spurkranz eines Schienenfahrzeuges gebracht.

Wie bei allen ein fließfähiges Medium führenden Systemen ist es auch bei dieser bekannten Dosiereinrichtung erforderlich, die vor den Ventilen und die hinter den Ventilen liegenden Kammern von Zeit zu Zeit zu entlüften, um z. B. vom Vorratsbehälter für das fließfähige Medium in die Eingangskammer oder durch das Strahldüsenrohr in die Ausgangskammer eingedrungene Luftbläschen aus diesen Kammern auszubringen. Das Entlüften erfolgt mittels von Hand zu betätigenden Entlüftungsventilen oder durch Herausdrehen von in Entlüftungskanälen angeordneten Schrauben. Dieser Entlüftungsvorgang ist zeitaufwendig und oft auch nur unter schwierigen Bedingungen durchführbar, da die Dosiereinrichtung oft an schwer zugänglichen Stellen angeordnet ist. Bei einer von Hand durchgeführten Entlüftung ist auch nicht immer sicher gestellt, daß die Entlüftung ordnungsgemäß und gründlich durchgeführt wird, da dies unter anderem auch von der Beobachtungsgabe der diese Arbeit ausführenden Person abhängt.

Der Erfindung liegt deshalb die Aufgabe zugrunde, eine Dosiereinrichtung der eingangs erwähnten Art zu schaffen, bei welcher mit einfachen Mitteln eine zuverlässige Entlüftung sichergestellt ist.

Diese Aufgabe wird mit den in den unabhängigen Patentansprüchen angegebenen Merkmalen gelöst. Weiterbildungen und vorteilhafte Ausgestaltungen der Erfindung sind in den abhängigen Ansprüchen angegeben.

Die Erfindung bietet insbesondere den Vorteil, mit einfachen Mitteln eine selbsttätig entlüftende Dosiereinrichtung zu erhalten, bei welcher auf gesonderte Entlüftungsventile oder auch auf gesonderte verschließbare Entlüftungsöffnungen vollständig verzichtet werden kann. Der Entlüftungsvorgang erfolgt praktisch bei jedem Hub des den fließfähigen Stoff ausbringenden Dosierkolbens der Dosiereinrichtung.

Gemäß einer in den abhängigen Ansprüchen angegebenen Weiterbildung der Erfindung ist durch die Ausbildung der dem Eingang bzw. der der Dosierkammer benachbarten Wand der Eingangskammer als Leitfläche für im Kammer- und Kanalsystem der Dosiereinrichtung befindliche Luftbläschen sichergestellt, daß die Luftbläschen nicht zwischen der Eingangskammer und der Dosierkammer hin und her wandern können und somit im System eingeschlossen bleiben, sondern je nach Ausbildung der Leitfläche zum Einlaßventil und somit zum Eingang oder zum Auslaßventil und somit zur Ausgangskammer hin geführt werden.

Anhand der Zeichnung werden nachstehend zwei Ausführungsbeispiele der Erfindung näher erläutert.

Es zeigen:

Fig. 1  schematisch eine Dosiereinrichtung für Schmiermittel in vertikaler Anordnung, wobei die hinter den Auslaßventilen gelegenen Ausgangskammern sich zu den Ausgängen hin konisch verjüngend ausgebildet sind und

Fig. 2  den einen Ausgang sowie ein Auslaßventil aufweisenden Teil einer Dosiereinrichtung, wobei der Ausgang exzentrisch zur Ausgangskammer angeordnet ist.

In einem ersten Gehäuseteil (41) eines aus zwei Gehäuseteilen (41) und (42) bestehenden Gehäuses ist eine in Richtung der Längsachse des ersten Gehäuseteiles (41) verlaufende erste Bohrung vorgesehen, in welcher ein erster Dosierkolben (24, 23) verschiebbar angeordnet ist. Der Dosierkolben (24, 23) begrenzt eine erste Dosierkammer (27) für Schmiermittel. Die erste Dosierkammer (27) ist mit einem als Eingangskammer (8) für Schmiermittel dienenden Kanal verbunden. Die erste Dosierkammer (27) wird auf ihrer dem ersten Dosierkolben (24, 23) gegenüberliegenden Seite von einem als Rückschlagventil ausgebildeten Auslaßventil (30, 31) begrenzt, welches sich aus einem gehäusefesten Ventilsitz (30) und einem in Richtung auf die Dosierkammer (27) zu von einer Feder (32) beaufschlagten Ventilkörper (31) zusammensetzt. Über das Auslaßventil (30, 31) ist die Dosierkammer (27) mit einer Ausgangskammer (43) für Schmiermittel verbindbar, an die ein Ausgang (34) anschließt. Am Ausgang (34) ist ein Strahldüsenrohr (35) befestigt, welches mit seinem freien Ende in Richtung auf den Spurkranz (36) eines Schienenfahrzeugrades hin ausgerichtet ist.

In einer im ersten Gehäuseteil (41) vorgesehenen, parallel zur ersten Bohrung angeordneten zweiten Bohrung wird ein zweiter Dosierkolben (10, 12) geführt. Der zweite Dosierkolben (10, 12) begrenzt eine zweite Dosierkammer (9) für Schmiermittel. Die zweite Dosierkammer (9) ist ebenfalls mit der Eingangskammer (8) verbunden. Die zweite Dosierkammer (9) wird auf ihrer dem Dosierkolben (10, 12) gegenüberliegenden Seite von einem als Rückschlagventil ausgebildeten weiteren Auslaßventil (7, 6) begrenzt, welches sich aus einem gehäusefesten Ventilsitz (7) und einem in Richtung auf die Dosierkammer (9) zu von einer Feder (5) beaufschlagten Ventilkörper (6) zusammensetzt. Über das zweite Auslaßventil (7, 6) ist die zweite Dosierkammer (9) mit einer Ausgangskammer (44) für Schmiermittel verbindbar, an die ein Ausgang (3) anschließt. Am Ausgang (3) ist ein Strahldüsenrohr (2) befestigt, welches mit seinem freien Ende in Richtung auf den Spurkranz (1) eines weiteren Schienenfahrzeugrades hin ausgerichtet ist.

Die die erste Ausgangskammer (43) begrenzende Wand (33) ist vom Ventilsitz (30) des ersten Auslaßventils (30, 31) ausgehend in Richtung auf den Ausgang (34) zu sich konisch verjüngend ausgebildet. Desgleichen ist die die zweite Ausgangskammer (44) begrenzende Wand (4) vom Ventilsitz (7) des zweiten Auslaßventils (6, 7) ausgehend in Richtung auf den Ausgang (3) zu sich konisch verjüngend ausgebildet. Die konisch ausgebildete Wand (33) bzw. die konisch ausgebildete Wand (4) der ersten Ausgangskammer (43) bzw. der zweiten Ausgangskammer (44) ist in Richtung auf den zugehörigen Ausgang (34) bzw. Ausgang (3) zu so ausgebildet, daß sie keine sich auf das Kammerinnere zu erstreckenden Vorsprünge aufweist, welche das Ableiten von in der Ausgangskammer (43) bzw. in der Ausgangskammer (44) befindlichen Luftbläschen beeinträchtigen könnten. Der an die Ausgangskammer (43) bzw. an die Ausgangskammer (44) anschließende Ausgang (34) mit Strahldüsenrohr (35) bzw. Ausgang (3) mit Strahldüsenrohr (2) ist so zu der zugehörigen Ausgangskammer (43) bzw. (44) angeordnet, daß er auf gleicher Höhe oder oberhalb des maximal möglichen Schmiermittelpegels in der Ausgangskammer (43) bzw. in der Ausgangskammer (44) gelegen ist.

Der als Eingangskammer (8) dienende Kanal ist einerseits über eine als Eingang (37) für Schmiermittel dienende Gehäuseausnehmung und eine an diese anschließende Leitung (38) mit einem einen Einfüllstutzen (40) mit Entlüftungsöffnung aufweisenden Vorratsbehälter (39) für Schmiermittel und andererseits mit einer im ersten Gehäuseteil (41) konzentrisch zum Eingang (37) angeordneten, dem Eingang (37) gegenüberliegenden Bohrung (45) verbunden. In der Bohrung (45) ist ein zum Teil als Ventilschieber (20) ausgebildeter Kolben (26) verschiebbar angeordnet. Das dem Eingang (37) zugewandte Ende (20) des Kolbens (26) bildet mit der der Eingangskammer (8) zugewandten Seite (46) des Eingangs (37) ein als Schieberventil ausgebildetes Einlaßventil (46, 20), über welches die Eingangskammer (8) mit dem Eingang (37) und somit mit dem Vorratsbehälter (39) verbindbar ist. Der Kolben (26) erstreckt sich mit seiner der Eingangskammer (8) abgewandten Seite in eine Ausnehmung (11) des zweiten Gehäuseteiles (42) hinein und weist an seinem in der Ausnehmung (11) gelegenen Ende einen umlaufenden Vorsprung (22) auf. Eine auf den Kolben (26) aufgeschobene Feder (25) stützt sich am ersten Gehäuseteil (41) ab und beaufschlagt den Vorsprung (22) des Kolbens (26) in Öffnungsrichtung des Einlaßventils (46, 20).

Diejenige Wand (29) der Eingangskammer (8), welche auf der Seite des Eingangs (37) gelegen ist, weist von der ersten Dosierkammer (27) zum Eingang (37) hin eine Steigung auf. Desgleichen weist die Wand (28) der Eingangskammer (8) von der zweiten Dosierkammer (9) zum Eingang (37) hin eine Steigung auf. Dadurch, daß durch diese Maßnahme der Eingang (37) bezogen auf den Schmiermittelpegel in der Eingangskammer (8) an der höchsten Stelle der Eingangskammer (8) gelegen ist, wird erreicht, daß in der Eingangskammer (8) befindliche Luftbläschen in Richtung auf den Ausgang (37) zu abgeleitet werden und nicht zwischen der ersten Dosierkammer (27) und der zweiten Dosierkammer (9) hin und her wandern. Denkbar ist es natürlich auch, die Wände (29, 28) der Eingangskammer (8) vom Eingang (37) in Richtung auf die Dosierkammern (37) und (9) zu mit als Leitflächen für Luftbläschen dienenden Steigungen zu versehen. In diesem Fall würden die Luftbläschen aus der Eingangskammer (8) über die Auslaßventile (30, 31, 7, 6) den Ausgangskammern (43, 44) zugeführt werden.

Die beiden parallel zueinander und parallel zum Kolben (26) im Gehäuse (41, 42) angeordneten, als Dosierkolben dienenden Kolben (24, 10) erstrecken sich ebenfalls in die im zweiten Gehäuseteil (42) angeordnete Ausnehmung (11) hinein und weisen an ihrem in der Ausnehmung (11) gelegenen Ende je einen umlaufenden Vorsprung (23) und (12) auf.

In der dem ersten Gehäuseteil (41) abgewandten Seite des zweiten Gehäuseteiles (42) ist eine Ausnehmung (19) vorgesehen, durch welche ein stangenförmiger Körper (17) eines Betätigungsgliedes für die Dosiereinrichtung aus dem Gehäuse (41, 42) herausgeführt ist. Ein in der Ausnehmung (19) angeordneter Dichtring (18) liegt dichtend an dem stangenförmigen Körper (17) an. Das Betätigungsglied besteht aus einem rotationssymetrisch ausgebildeten Körper (16) mit einem sich radial nach außen erstreckenden umlaufenden Vorsprung (15) sowie einem koaxial zu dem mit dem Betätigungsglied (16) verbundenen stangenförmigen Körper (17), angeordneten, sich in die Ausnehmung (11) des zweiten Gehäuseteiles (42) hineinersteckenden zylindrischen Teil (14), welches an seinem freien Ende einen sich radial nach außen erstreckenden umlaufenden Vorsprung (13) aufweist, der die Vorsprünge (23, 12) der Dosierkolben (24, 10) hintergreift und so als Mitnehmer für die Dosierkolben (24, 10) dient.

Die Funktion der im vorstehenden beschriebenen Dosiereinrichtung wird nachfolgend näher erläutert.

Zwecks Betätigung der Dosiereinrichtung wird das Betätigungsglied (16, 15, 14, 13) in Richtung auf das erste Gehäuseteil (41) zu bewegt. Dabei wird der am Teil (16) des Betätigungsgliedes anliegende Kolben (26) gegen die Kraft der Feder (25) in Richtung auf den Eingang (37) zu bewegt und taucht mit dem als Ventilschieber (20) dienenden Endbereich in den Eingang (37) ein. Das vom Ventilschieber (20) und dem als Ventilsteuerkante dienenden Randbereich (46) des Eingangs (37) gebildete Einlaßventil (20, 46) ist jetzt geschlossen. Eine Teilmenge des in der Eingangskammer (8) befindlichen Schmiermittels wird vom Kolben (26) aus der Eingangskammer (8) heraus in den Eingang (37) gedrückt. Möglicherweise sich in der Eingangskammer (8) befindliche Luftbläschen, die sich an dem die höchst gelegene Stelle in der Eingangskammer (8) darstellenden Eingang (37) gesammelt haben, werden bei diesem Vorgang vom Schmiermittel in den Eingang (37) und von dort weiter in die Leitung (38) transportiert. Die Luftbläschen steigen durch die Leitung (38) weiter auf in den Vorratsbehälter (39) und gelangen von dort zur Atmosphäre hin.

Bei der weiteren Bewegung des Betätigungsgliedes (16, 15, 14, 13) in Richtung auf das erste Gehäuseteil (41) zu werden die beiden Dosierkolben (24, 23, 10, 12) von dem umlaufenden Vorsprung (15) des Betätigungsgliedes (16, 15, 14, 13) mitgenommen und in Richtung auf die beiden Auslaßventile (30, 31, 7, 6) zu verschoben. Durch die kontinuierliche Verringerung des Volumens der beiden Dosierkammern (27, 9) wird in den Dosierkammern (27, 9) ein Druck erzeugt, dessen Höhe abhängig ist von der Schließkraft der Auslaßventile (30, 31, 7, 6). Ist der Druck in den Dosierkammern (27, 9) soweit angestiegen, daß die im wesentlichen durch die Federn (32, 5) der beiden Auslaßventile (30, 31, 7, 6) vorbestimmte Schließkraft überschritten wird, so heben die Ventilkörper (31, 6) von den Ventilsitzen (30, 7) ab. Durch die nun geöffneten Auslaßventile (31, 30, 6, 7) gelangt das in den Dosierkammern (27, 9) befindliche Schmiermittel in die Ausgangskammern (43, 44) und von dort weiter durch die Ausgänge (34, 3) und die Strahldüsenrohre (35, 2) auf die Spurkränze (36, 1) der Schienenfahrzeugräder. Möglicherweise in den Ausgangskammern (43, 44) befindliche Luftbläschen werden bei diesem Vorgang vom Schmiermittel durch die Ausgänge (34, 3) und die Strahldüsenrohre (35, 2) zur Atmosphäre hin transportiert.

Dadurch, daß die die Ausgangskammern (43, 44) von sich von den Auslaßventilen (6, 7, 30, 31) in Richtung auf die Ausgänge (34, 3) zu konisch verjüngenden Wandungen (33, 4) begrenzt werden und die Ausgänge (34, 3), bezogen auf den Schmiermittelpegel in den Ausgangskammern (43, 44), an der höchsten Stelle der Ausgangskammern (43, 44) angeordnet sind, bewegen sich in den Ausgangskammern (43, 44) befindliche Luftbläschen, bedingt durch Auftrieb, stets in Richtung auf die Ausgänge (34, 33) zu. Die beim Ausbringen des Schmiermittels aus den Ausgangskammern (43, 44) auftretenden Strömungskräfte unterstützen zusätzlich die Bewegung der Luftbläschen in Richtung auf die Ausgänge (3, 33) zu. Die sich konisch in Richtung auf die Ausgänge (34, 33) zu verjüngenden Wände (32, 4) der Ausgangskammern (43, 44) dienen dabei als Leitflächen für die Luftbläschen. Die die Ausgangskammern (43, 44) oder auch die die Ausgänge (34, 3) begrenzenden Wände müssen nicht zwangsläufig eine ebene Fläche aufweisen. Sie können auch mit Abstufungen versehen sein. Die Abstufungen müssen jedoch, bezogen auf den Schmiemittelpegel, stets eine Steigung auf den Ausgang (34, 3) zu bzw. in Richtung auf das Strahldüsenrohr (35, 2) zu aufweisen, so daß Luftbläschen immer in Richtung zur Atmosphäre hin abgeleitet werden.

Wird das Betätigungsglied (16, 15, 14, 13) wieder zurückgestellt, so folgt der Kolben (26, 22) unter Einwirkung der Kraft der Feder (25) diesem. Das Einlaßventil (46, 20) gelangt in die Offenstellung. Die Auslaßventile (30, 31, 7, 6) sind wieder geschlossen, da der beim Ausbringen des Schmiermittels aus den Dosierkammern (27, 9) erzeugte Überdruck sich über die als Rückschlagventile ausgebildeten Auslaßventile (30, 31, 7, 6) abgebaut hat. Bei der weiteren Bewegung des Betätigungsgliedes (16, 15, 14, 13) in Richtung vom ersten Gehäuseteil (41) weg werden die beiden Dosierkolben (24, 23, 10, 12) vom Vorsprung (13) des Betätigungsgliedes (16, 15, 14, 13) mitgenommen. Das Volumen der Dosierkammern (27, 9) vergrößert sich. Über das geöffnete Einlaßventil (46, 20) gelangt Schmiermittel vom Vorratsbehälter (39) in die Eingangskammer (8) und von dieser weiter in die Dosierkammern (27, 9).

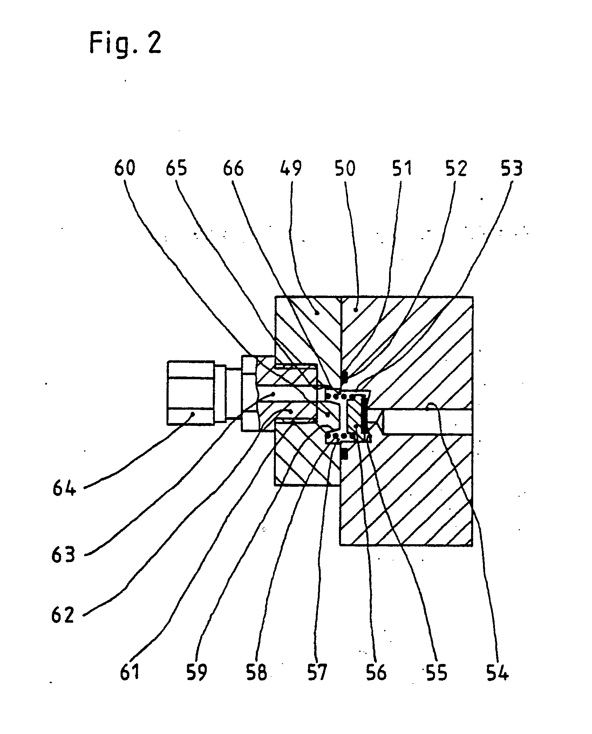

Fig. 2 zeigt einen Ausschnitt einer Dosiereinrichtung, welcher eine Dosierkammer, ein Auslaßventil sowie eine Ausgangskammer mit Ausgang darstellt.

In einem aus einem ersten Gehäuseteil (49) und einem zweiten Gehäuseteil (50 ) bestehenden Gehäuse ist horizontal eine Dosierkammer (54) angeordnet, an die eine Ausgangskammer (57) angrenzt. Die Dosierkammer (54) ist über ein in Richtung auf die Ausgangskammer (57) zu in die Offenstellung bringbares, als Rückschlagventil ausgebildetes Auslaßventil mit der Ausgangskammer (57) verbindbar. Das Auslaßventil setzt sich aus einem gehäusefesten Ventilsitz (55) und einem Ventilkörper (56) zusammen, wobei der Ventilkörper (56) von einer Feder (58) in Richtung auf den Ventilsitz (55) zu belastet wird. Die Ausgangskammer (57) setzt sich aus einer im zweiten Gehäuseteil (50) angeordneten zylindrischen Ausnehmung (53) und einer daran anschließenden im ersten Gehäuseteil (49) angeordneten ringförmigen Ausnehmung (66) zusammen, wobei der ringförmige Teil (66) der Ausgangskammer (57, 66) von einem in der im ersten Gehäuseteil (49) angeordneten Ausnehmung (66) vorgesehenen kegelförmig ausgebildeten Vorsprung (60, 59) gebildet wird, der sich in Richtung auf den Ventilkörper (56) des Auslaßventils (56, 55) zu verjüngend in die Ausgangskammer (57) hineinerstreckt. Exzentrisch zur Längsachse der Ausgangskammer (57) ist im ersten Gehäuseteil (49) ein Ausgang (63) angeordnet. Der Ausgang (63) ist, bezogen auf den Schmiermittelpegel in der Ausgangskammer (57), mit wenigstens einem Teil seines Durchlaßquerschnittes an der höchsten Stelle der Ausgangskammer (57, 66) an der dem Auslaßventil (56, 55) entferntest liegenden Stelle der Ausgangskammer (57) angeordnet.

Ein Teil des kanalartig ausgebildeten Ausgangs (63) ist in einem Gewindestutzen (62) mit Leitungsanschlußstück (64) angeordnet, der in eine mit Gewinde versehene Ausnehmung (61) im ersten Gehäuseteil (49) eingeschraubt ist. Der Übergang von der Augangskammer (57) zum Ausgang (63) wird von einer sich in Richtung auf den Ausgang (63) zu erstreckenden Schrägflächen (65) gebildet, wobei die Schrägfläche (65) von der höchsten Stelle der Ausgangskammer (57) ausgehend in Richtung auf die Wandung des Ausgangs (63) zu ansteigt. Zwischen dem ersten Gehäuseteil (49) und dem zweiten Gehäuseteil (50) ist im Bereich der Ausgangskammer (57) eine Nut (52) im zweiten Gehäuseteil (50) vorgesehen, in der ein Dichtring (51) angeordnet ist.

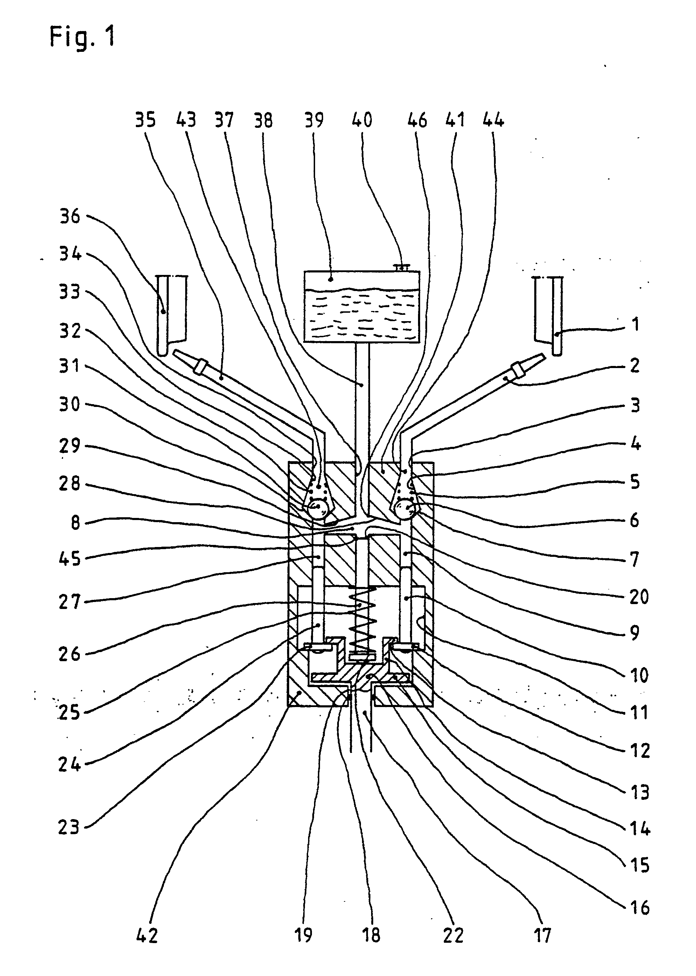

Die Funktion dieser Dosiereinrichtung ist die gleiche wie die der in Fig. 1 beschriebenen Dosiereinrichtung. Da der Ausgang (63) an der höchsten Stelle der Ausgangskammer (57) angeordnet ist und der als Lagefixierung für die Feder (58) des Auslaßventiles dienende Vorsprung (60) eine kegelförmig ausgebildete Mantelfläche (59) aufweist, welche als Leitfläche für in der Ausgangskammer (57) befindliche Luftbläschen dient, ist sichergestellt, daß die Luftbläschen stets zum Ausgang (63) hin geführt werden und zur Atmosphäre gelangen.

Die erfindungsgemäße Dosiereinrichtung kann mit nur einem Ausgang oder auch mit mehreren Ausgängen versehen sein, sie kann auch mehrere Eingänge aufweisen. Die beanspruchte Dosiereinrichtung ist zur dosierten Abgabe aller fließfähigen Stoffe, auch zähflüssiger Fette geeignet.

## Patentansprüche

1. Dosiereinrichtung für fließfähige Stoffe, insbesondere für Schmiermittel zur Spurkranzschmierung von Schienenfahrzeugen, mit folgenden Merkmalen:
   a) Es ist wenigstens eine Eingangskammer (8) vorgesehen, welche über ein Einlaßventil (46, 20) mit einem Eingang (37) verbindbar ist;
   b) es ist wenigstens eine mit der Eingangskammer (8) verbundene Dosierkammer (9, 27) vorgesehen, die von einem Dosierkolben (10, 24) begrenzt wird und über ein Auslaßventil (6, 7, 31, 30) mit einer Ausgangskammer (44, 43) verbindbar ist, an welche ein Ausgang (3, 34) anschließt;

   gekennzeichnet durch die folgenden Merkmale:

   c) Der Ausgang (3, 33) ist derart angeordnet, daß er mit wenigstens einem Teil seines Durchlaßquerschnittes an der höchsten Stelle der Ausgangskammer (44, 43) gelegen ist;
   d) die Wand bzw. die Wände der Ausgangskammer (44, 43) sind so ausgebildet, daß bei Vorhandensein von fließfähigen Stoffen in der Ausgangskammer in der Ausgangskammer (44, 43) befindliche Luftbläschen durch Auftrieb und/oder durch Strömungskräfte in Richtung auf den Ausgang (3, 34) zu geleitet werden.

2. Dosiereinrichtung für fließfähige Stoffe, insbesondere für Schmiermittel zur Spurkranzschmierung von Schienenfahrzeugen, mit folgenden Merkmalen:
   a) Es ist wenigstens eine Eingangskammer (8) vorgesehen, welche über ein Einlaßventil (46, 20) mit einem Eingang (37) verbindbar ist;
   b) es ist wenigstens eine mit der Eingangskammer (8) verbundene Dosierkammer (9, 27) vorgesehen, die von einem Dosierkolben (10, 24) begrenzt wird und über ein Auslaßventil (6, 7, 31, 30) mit einer Ausgangskammer (44, 43) verbindbar ist, an welche ein Ausgang (3, 33) anschließt;

dadurch gekennzeichnet, daß die Eingangskammer (8) und das Einlaßventil (46, 20) so ausgebildet sind, daß bei Vorhandensein von fließfähigen Stoffen in der Eingangskammer (8) in der Eingangskammer (8) befindliche Luftbläschen bei geöffnetem Einlaßventil (46, 20) durch Auftrieb und/oder durch Strömungskräfte in Richtung auf den Eingang (37) zu geleitet werden.

3. Dosiereinrichtung für fließfähige Stoffe, insbesondere für Schmiermittel zur Spurkranzschmierung von Schienenfahrzeugen, mit folgenden Merkmalen:

a) Es ist wenigstens eine Eingangskammer (8) vorgesehen, welche über ein Einlaßventil (46, 20) mit einem Eingang (37) verbindbar ist;

b) es ist wenigstens eine mit der Eingangskammer (8) verbundene Dosierkammer (9, 27) vorgesehen, die von einem Dosierkolben (10, 24) begrenzt wird und über ein Auslaßventil (6, 7, 31, 30) mit einer Ausgangskammer (44, 43) verbindbar ist, an welche ein Ausgang (3, 33) anschließt;

dadurch gekennzeichnet, daß die Eingangskammer (8) und das zur Verbindung der Dosierkammer (9, 27) mit der Ausgangskammer (44, 43) dienende Auslaßventil (6, 7, 31, 30) so ausgebildet sind, daß bei Vorhandensein von fließfähigen Stoffen in der Eingangskammer (8) und in der Dosierkammer (9, 27) in der Eingangskammer (8) befindliche Luftbläschen durch Auftrieb und/oder durch Strömungskräfte in Richtung auf den Ausgang (3, 34) zu geleitet werden.

4. Dosiereinrichtung nach Anspruch 1, dadurch gekennzeichnet, daß die Eingangskammer (8) und das Einlaßventil (46, 20) so ausgebildet sind, daß bei Vorhandensein von fließfähigen Stoffen in der Eingangskammer (8) in der Eingangskammer (8) befindliche Luftbläschen bei geöffnetem Einlaßventil (46, 20) durch Auftrieb und/oder durch Strömungskräfte in Richtung auf den Eingang (37) zu geleitet werden.

5. Dosiereinrichtung nach Anspruch 1, dadurch gekennzeichnet, daß die Eingangskammer (8) und das zur Verbindung der Dosierkammer (9, 27) mit der Ausgangskammer (44, 43) dienende Auslaßventil (6, 7, 31, 30) so ausgebildet sind, daß bei Vorhandensein von fließfähigen Stoffen in der Eingangskammer (8) und in der Dosierkammer (9, 27) in der Eingangskammer (8) befindliche Luftbläschen durch Auftrieb und/oder durch Strömungskräfte in Richtung auf den Ausgang (8, 34) zu geleitet werden.

6. Dosiereinrichtung nach Anspruch 2, dadurch gekennzeichnet, daß die Eingangskammer (8) und das zur Verbindung der Dosierkammer (9, 27) mit der Ausgangskammer (44, 43) dienende Auslaßventil (6, 7, 31, 30) so ausgebildet sind, daß bei Vorhandensein von fließfähigen Stoffen in der Eingangskammer (8) und in der Dosierkammer (9, 27) in der Eingangskammer (8) befindliche Luftbläschen durch Auftrieb und/oder durch Strömungskräfte in Richtung auf den Ausgang (3, 34) zu geleitet werden.

7. Dosiereinrichtung nach wenigstens einem der vorhergehenden Ansprüche, dadurch gekennzeichnet, daß der Ausgang (63) exzentrisch zur Längsachse der Ausgangskammer (57) und so zur Ausgangskammer (57) angeordnet ist, daß er an der höchsten Stelle der Ausgangskammer (57) gelegen ist.

8. Dosiereinrichtung nach wenigstens einem der vorhergehenden Ansprüche, dadurch gekennzeichnet, daß die Ausgangskammer (57) auf ihrer dem Auslaßventil (55, 56) gegenüberliegenden Seite einen als Lagerung für eine Ventilfeder (58) dienenden kegelförmig ausgebildeten und sich in die Ausgangskammer (57) hineinerstreckenden Vorsprung (60, 59) aufweist, wobei der kegelförmige Vorsprung (60, 59) sich in Richtung auf das Auslaßventil (55, 56) zu verjüngt.

9. Dosiereinrichtung nach wenigstens einem der vorhergehenden Ansprüche, dadurch gekennzeichnet, daß die Ausgangskammer (43, 44) eine sich vom Auslaßventil (6, 7, 30, 31) in Richtung auf den Ausgang (3, 34) zu verjüngende konische Form aufweist.

10. Dosiereinrichtung nach wenigstens einem der vorhergehenden Ansprüche, dadurch gekennzeichnet, daß wenigstens der zwischen der Dosierkammer (9, 27) und dem Eingang (37) befindliche Teil (28, 29) der Eingangskammer (8) in Richtung von der Dosierkammer (9, 27) zum Eingang (37) hin eine Steigung aufweist.

11. Dosiereinrichtung nach wenigstens einem der vorhergehenden Ansprüche, dadurch gekennzeichnet, daß wenigstens der zwischen der Dosierkammer (9, 27) und dem Eingang (37) befindliche Teil der Eingangskammer (8) in Richtung von dem Eingang (37) zur Dosierkammer (9, 27) hin eine Steigung aufweist.

12. Dosiereinrichtung nach wenigstens einem der vorhergehenden Ansprüche, dadurch gekennzeichnet, daß das Einlaßventil (46, 20) als Schieberventil ausgebildet ist.

13. Dosiereinrichtung nach wenigstens einem der vorhergehenden Ansprüche, dadurch gekennzeichnet, daß das Schieberventil von der der Eingangskammer (8) zugewandten Seite (46) des Eingangs (37) und der der Eingangskammer (8) zugewandten Seite eines als Ventilschieber (20) ausgebildeten Teiles eines Kolbens (26) gebildet wird.

**Claims**

1. Quantity-regulating device for flowable substances, especially for lubricants for the tread lubrication of rail vehicles, having the following features :

   a) at least one entry chamber (8) is provided, which is connectable through an inlet valve (46, 20) with an entry (37);

   b) at least one quantity-regulating chamber (9, 27) connected with the entry chamber (8) is provided which is limited by a quantity-regulating piston (10, 24) and is connectable through an outlet valve (6, 7, 31, 30) with an exit chamber (44, 43) which is adjoined by an exit (3, 34);

   characterised by the following features :

   c) The exit (3, 33) is so arranged that it is placed with at least a part of its passage cross-section at the highest point of the exit chamber (44, 43);

   d) The wall or walls of the exit chamber (44, 43)is/are so formed that when the flowable substances are present in the exit chamber, air bubbles situated in the exit chamber (44, 43) are guided by buoyancy and/or by flow forces in the direction towards the exit (3, 34).

2. Quantity-regulating device for flowable substances, especially for lubricants for the tread lubrication of rail vehicles, having the following features :

   a) at least one entry chamber (8) is provided which is connectable with an entry (37) by way of an inlet valve (46, 20);

   b) at least one quantity-regulating chamber (9, 27) connected with the entry chamber (8) is provided which is limited by a quantity-regulating piston (10, 24) and is connectable by way of an outlet valve (6, 7, 31, 30) with an exit chamber (44, 43) which is adjoined by an exit (3, 33),

   characterised in that the entry chamber (8) and the inlet valve (46, 20) are formed so that when flowable substances are present in the entry chamber (8), air bubbles situated in the entry chamber (8) are conducted, with the inlet valve (46, 20) opened, by buoyancy and/or by flow forces in the direction towards the entry (37).

3. Quantity-regulating device for flowable substances, especially for lubricants for the tread lubrication of rail vehicles, having the following features :

   a) At least one entry chamber (8) is provided which is connectable with an entry (37) by way of an inlet valve (46, 20);

   b) at least one quantity-regulating chamber (9, 27) connected with the entry chamber (8) is provided which is limited by a quantity-regulating piston (10, 24) and is connectable through an outlet valve (6, 7, 31, 30) with an exit chamber (44, 43) which is adjoined by an exit (3, 33);

   characterised in that the entry chamber (8) and the outlet valve (6, 7, 31, 30) serving for the connection of the quantity-regulating chamber (9, 27) with the exit chamber (44, 43) are formed so that when flowable substances are present in the entry chamber (8) and in the quantity-regulating chamber (9, 27), air bubbles situated in the entry chamber (8) are guided by buoyancy and/or by flow forces in the direction towards the exit (3, 34).

4. Quantity-regulating device according to Claim 1, characterised in that the entry chamber (8) and the inlet valve (46, 20) are so formed that when flowable substances are present in the entry chamber (8), air bubbles situated in the entry chamber (8) are guided, with the inlet valve (46, 20) opened, by buoyancy and/or by flow forces in the direction towards the entry (37).

5. Quantity-regulating device according to Claim 1, characterised in that the entry chamber (8) and the outlet valve (6, 7, 31, 30) which serves for the connection of the quantity-regulating chamber (9, 27) with the exit chamber (44, 43) are so formed that when flowable substances are present in the entry chamber (8) and in the quantity-regulating chamber (9, 27), air bubbles situated in the entry chamber (8) are guided by buoyancy and/or by flow forces in the direction towards the exit (8, 34).

6. Quantity-regulating device according to Claim 2, characterised in that the entry chamber (8) and the outlet valve (6, 7, 31, 30) which serves for the connection of the quantity-regulating chamber (9, 27) with the exit chamber (44, 43) are so formed that when flowable substances are present in the entry chamber (8) and in the quantity-regulating chamber (9, 27), air bubbles situated in the entry chamber (8) are guided by buoyancy and/or by flow forces in the direction towards the exit (3, 34).

7. Quantity-regulating device according to at least one of the preceding Claims, characterised in that the exit (63) is arranged eccentrically of the longitudinal axis of the exit chamber (57) and in such a way in relation to the exit chamber (57) that it is placed at the highest point of the exit chamber (57).

8. Quantity-regulating device according to at least one of the preceding Claims, characterised in that the exit chamber (57) comprises on its side lying opposite to the outlet valve (55, 56) a conically formed projection (60, 59) extending into the exit chamber (57), serving as mounting for a valve spring (58), the conical projection (60, 59) tapering in the direction towards the outlet valve (55, 56).

9. Quantity-regulating device according to at least one of the preceding Claims, characterised in that the exit chamber (43, 44) has a conical form tapering from the outlet valve (6, 7, 30, 31) in the direction towards the exit (3, 34).

10. Quantity-regulating device according to at least one of the preceding Claims, characterised in that at least the part (28, 29) of the entry chamber (8) situated between the quantity-regulating chamber (9, 27) and the entry (37) has a slope rising in the direction from the quantity-regulating chamber (9, 27) to the entry (37).

11. Quantity-regulating device according to at least one of the preceding Claims, characterised in that at least the part of the entry chamber (8) situated between the quantity-regulating chamber (9, 27) and the entry (37 has a slope rising in the direction from the entry (37) to the quantity-regulating chamber (9, 27).

12. Quantity-regulating device according to at least one of the preceding Claims, characterised in that the inlet valve (46, 20) is formed as slide valve.

13. Quantity-regulating device according to at least one of the preceding Claims, characterised in that the slide valve is formed by the side (46) of the entry (37) facing the entry chamber (8) and the side of a part of a piston (26) formed as valve slider (20), facing the entry chamber (8).

## Revendications

1. Dispositif de dosage de substances fluides, en particulier de produits lubrifiants destinés au graissage de boudins de véhicules sur rails, présentant les particularités suivantes :

    a) il est prévu au moins une chambre d'entrée (8) qui peut être mise en communication avec une entrée (37) par l'intermédiaire d'une soupape d'entrée (46, 20),

    b) il est prévu au moins une chambre de dosage (9, 27) qui est reliée à la chambre d'entrée (8), est limitée par un piston de dosage (10, 24) et peut être mise en communication par l'intermédiaire d'une soupape de sortie (6, 7, 31, 30) avec une chambre de sortie (44, 43) à laquelle se raccorde une sortie (3, 34),

    caractérisé par les particularités suivantes :

    c) la sortie (3, 33) est agencée de telle façon qu'elle est disposée avec au moins une partie de sa section transversale de passage, à l'emplacement le plus élevé de la chambre de sortie (44, 43),

    d) la ou les parois de la chambre de sortie (44, 43) sont réalisées de telle façon que, en présence de substances fluides dans la chambre de sortie, des bulles d'air situées dans la chambre de sortie (44, 43) sont conduites par une force ascensionnelle et/ou par des forces d'écoulement en direction de la sortie (3, 34).

2. Dispositif de dosage de substances fluides, en particulier pour des produits lubrifiants destinés au graissage de boudins de véhicules sur rails, présentant les particularités suivantes :

    a) il est prévu au moins une chambre d'entrée (8) qui peut être mise en communication avec une entrée (37) par l'intermédiaire d'une soupape d'entrée (46, 20),

    b) il est prévu au moins une chambre de dosage (9, 27) qui est reliée à la chambre d'entrée (8), est limitée par un piston de dosage (10, 24) et peut être mise en communication, par l'intermédiaire d'une soupape de sortie (6, 7, 31, 30), avec une chambre de sortie (44, 43) à laquelle se raccorde une sortie (3, 33),

    caractérisé en ce que la chambre d'entrée (8) et la soupape d'admission (46, 20) sont réalisées de façon que, en présence de substances fluides dans la chambre d'entrée (8), des bulles d'air situées dans la chambre d'entrée (8) sont guidées vers l'entrée (37), lorsque la soupape d'admission (46, 20) est ouverte, par une force ascensionnelle et/ou par des forces d'écoulement.

3. Dispositif de dosage de substances fluides, en particulier de produits lubrifiants pour le graissage de boudins de roues de véhicules sur rails, présentant les particularités suivantes :

a) il est prévu au moins une chambre d'entrée (8) qui peut être mise en communication avec une entrée (37) par l'intermédiaire d'une soupape d'admission (46, 20),

b) il est prévu au moins une chambre de dosage (9, 27) qui est reliée à la chambre d'entrée (8), est limitée par un piston de dosage (10, 24) et Peut être mise en communication par l'intermédiaire d'une soupape de sortie (6, 7, 31, 30) avec une chambre de sortie à laquelle se raccorde une sortie (3, 33),

caractérisé en ce que la chambre d'entrée (8) et la soupape de sortie (6, 7, 31, 30) servant à la liaison entre la chambre de dosage (9, 27) et la chambre de sortie (44, 43) sont réalisées de façon que, en présence de substances fluides dans la chambre d'entrée (8) et dans la chambre de dosage (9, 27), des bulles d'air situées dans la chambre d'entrée (8) sont guidées par une force ascensionnelle et/ou par des forces d'écoulement en direction de la sortie (3, 34).

4. Dispositif de dosage suivant la revendication I, caractérisé en ce que la chambre d'entrée (8) et la soupape d'admission (46, 20) sont réalisées de façon que, en présence de substances fluides dans la chambre d'entrée (8), des bulles d'air situées dans la chambre d'entrée (8) sont, lorsque la soupape d'admission (46, 20) est ouverte, guidées par une force ascensionnelle et/ou par des forces d'écoulement en direction de l'entrée (37).

5. Dispositif de dosage suivant la revendication I, caractérisé en ce que la chambre d'entrée (8) et la soupape de sortie (6, 7, 31, 30) servant à la liaison entre la chambre de dosage (9, 27) et la chambre de sortie (44, 43) sont réalisées de façon que, en présence de substances fluides dans la chambre d'entrée (8) et dans la chambre de dosage (9, 27), des bulles d'air situées dans la chambre d'entrée (8) sont guidées par une force ascensionnelle et/ou par des forces d'écoulement en direction de la sortie (3, 34).

6. Dispositif de dosage suivant la revendication 2, caractérisé en ce que la chambre d'entrée (8) et la soupape de sortie (6, 7, 31, 30) servant à la liaison entre la chambre de dosage (9, 27) et la chambre de sortie (44, 43) sont réalisées de façon que, en présence de substances fluides dans la chambre d'entrée (8) et dans la chambre de dosage (9, 27), des bulles d'air situées dans la chambre d'entrée (8) sont guidées par une force ascensionnelle et/ou par des forces d'écoulement en direction de la sortie (3, 34).

7. Dispositif de dosage suivant au moins l'une des revendications précédentes, caractérisé en ce que la sortie (63) est agencée de manière excentrique par rapport à l'axe longitudinal de la chambre de sortie (57) et ainsi par rapport à la chambre de sortie (57), de façon qu'elle soit placée à l'endroit le plus élevé de la chambre de sortie (57).

8. Dispositif de dosage suivant au moins l'une des revendications précédentes, caractérisé en ce que la chambre de sortie (57) présente, du côté opposé à la soupape de sortie (55, 56), une saillie (60, 59) qui est réalisée sous une forme conique, sert de support pour un ressort de soupape (58) et s'étend à l'intérieur de la chambre de sortie (57), la saillie conique (60, 59) s'amincissant en direction de la soupape de sortie (55, 56).

9. Dispositif de dosage suivant au moins l'une des revendications précédentes, caractérisé en ce que la chambre de sortie (43, 44) présente une forme conique qui s'amincit depuis la soupape de sortie (6, 7, 30, 31) en direction de la sortie (3, 34).

10. Dispositif de dosage suivant au moins l'une des revendications précédentes, caractérisé en ce qu'au moins la partie (28, 29) de la chambre d'entrée (8), qui est située entre la chambre de dosage (9, 27) et l'entrée (37) présente depuis la chambre de dosage (9, 27) une rampe en direction de l'entrée (37).

11. Dispositif de dosage suivant au moins l'une des revendications précédentes, caractérisé en ce qu'au moins la partie de la chambre d'entrée (8), située entre la chambre de dosage (9, 27) et l'entrée (37), présente à partir de l'entrée (37) une rampe en direction de la chambre de dosage (9, 27).

12. Dispositif de dosage suivant au moins l'une des revendications précédentes, caractérisé en ce que la soupape d'admission (46, 20) est réalisée sous la forme d'une soupape à coulisse.

13. Dispositif de dosage suivant au moins l'une des revendications précédentes, caractérise en ce que la soupape à coulisse est formée par le côté (46), tourné vers la chambre d'entrée (8), de l'entrée (37) et par le côté, tourné vers la chambre d'entrée (8), d'une partie d'un piston (26), qui est réalisée sous la forme d'un coulisseau (20).

# Fig. 1

35  43  37  38    39    40    46  41  44

36
34
33
32
31
30
29
28
8
45
27
26
25
24
23

1
2
3
4
5
6
7
20
9
10
11
12
13
14
15
16

42        19    18    22      17

Fig. 2